Europäisches Patentamt

European Patent Office

Office européen des brevets

(11) Numéro de publication: **0 197 888 B1**

# FASCICULE DE BREVET EUROPEEN

(45) Date de publication de fascicule du brevet: **15.04.92**

(51) Int. Cl.⁵: **H02K  23/66**, H02K 11/00, H02K 5/22, H02K 23/54

(21) Numéro de dépôt: **86810117.1**

(22) Date de dépôt: **06.03.86**

(54) **Moteur électrique à courant continu.**

(30) Priorité: **03.04.85 CH 1452/85**

(43) Date de publication de la demande:
**15.10.86 Bulletin  86/42**

(45) Mention de la délivrance du brevet:
**15.04.92 Bulletin  92/16**

(84) Etats contractants désignés:
**CH DE FR GB IT LI**

(56) Documents cités:
**WO-A-83/04348**
**DE-A- 2 647 675**
**FR-A- 1 449 703**
**FR-A- 2 220 914**
**FR-A- 2 369 728**

(73) Titulaire: **Asgalium S.A.**
**Avenue Léopold-Robert 73a**
**CH-2300 La Chaux-de-Fonds(CH)**

(72) Inventeur: **Heyraud, Marc**
**Recorne 24b**
**CH-2300 la Chaux-de-Fonds(CH)**

(74) Mandataire: **Rochat, Daniel Jean et al**
**Bovard SA Ingénieurs-Conseils ACP Optin-**
**genstrasse 16**
**CH-3000 Bern 25(CH)**

EP 0 197 888 B1

Rank Xerox (UK) Business Services

## Description

La présente invention se rapporte à une catégorie de moteurs électriques dont une des deux parties, le rotor ou le stator, est équipée d'aimants permanents. Les moteurs électriques de ce genre sont généralement appelés transducteurs électromécaniques. On entend par là en effet une catégorie de moteurs électriques de faible puissance et de faibles dimensions, utilisés principalement dans des installations de mesure, de réglage ou de commande, ou encore comme capteurs. La tension d'alimentation est en général relativement faible et les enroulements sont souvent constitués par des fils isolés très fins.

La fabrication de ces moteurs se heurte à un certain nombre de difficultés qui proviennent des faibles dimensions des différents éléments à assembler et notamment de la finesse des fils des enroulements. Souvent, les extrémités de ces fils doivent être connectées à des fils de plus gros diamètre qui constituent les conducteurs d'alimentation reliant les enroulements aux bornes d'entrée. D'autres difficultés découlent de la mise en place des bobines et de leur montage dans des conditions telles que l'entrefer soit aussi mince que possible.

On distingue encore les moteurs à collecteur dans lesquels le rotor porte des bobines, des moteurs dans lesquels les bobines sont fixes, le rotor est équipé d'aimant permanents et la commutation du courant est commandée par des moyens électroniques comportant des détecteurs de l'orientation du rotor.

La présente invention se rapporte plus particulièrement à un moteur électrique à courant continu, comportant un rotor pourvu d'un collecteur, et un stator pourvu de balais et de bornes d'alimentation et dans lequel un entrefer est ménagé entre le stator et le rotor.

On sait déjà que dans la catégorie des moteurs à rotor à aimant permanent, il est possible d'utiliser des substrats portant des réseaux de conducteurs imprimés, pour assurer certaines fonctions, notamment la connexion des bobines de stator avec les bornes d'alimentation (DOS-26 47 675; JP-Appln. 56-97 472; FR-2,369,728).

D'autre part, le document FR-1 449 703 enseigne l'emploi d'une feuille métallique mince, disposée dans l'entrefer d'un appareil dynamo-électrique, de manière à constituer un dispositif de captage de flux, amortissant les pointes de commutation.

La présente invention a pour but d'apporter une simplificcation constructive notable et en même temps une amélioration de leurs performances aux moteurs à collecteur, du genre mentionné plus haut.

Dans ce but, le moteur objet de l'invention est caractérisé en ce que le réseau est agencé dans son ensemble de façon à assurer l'une et l'autre des deux fonctions et comporte en outre une ou plusieurs zones ajourées, conformées de façon à réaliser des éléments de résistance de réglage, en série avec les conducteurs d'alimentation.

On va décrire ci-après, à titre d'exemple, une forme de réalisation du moteur selon l'invention.

Au dessin,

la fig. 1 est une vue en élévation latérale partiellement coupée du moteur, et

la fig. 2 une vue en plan de dessus du substrat souple portant un circuit imprimé incorporé au moteur.

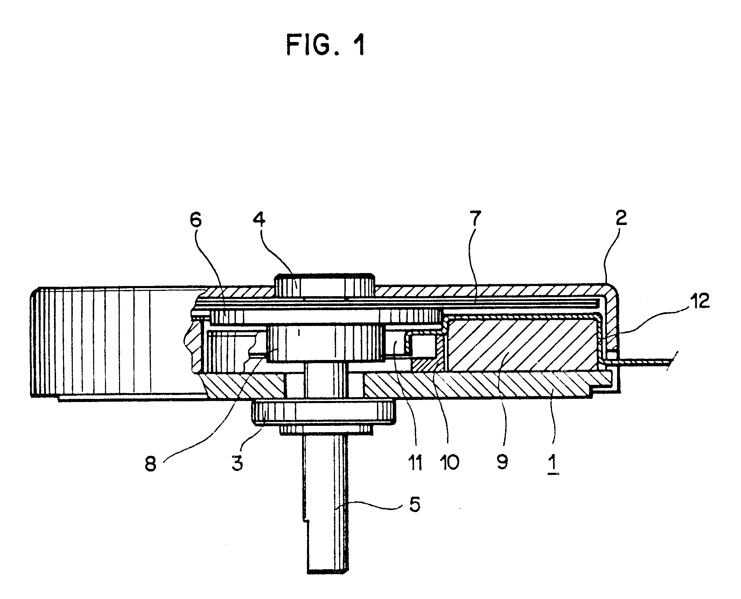

Le moteur représenté à la fig. 1 est du type à collecteur, avec un rotor comportant une série de bobines plates réparties autour de son axe. Ce moteur comporte un boîtier qui est constitué principalement d'une platine 1 et d'un couvercle 2 emboîté sur la platine 1. La platine porte un palier 3, tandis que le couvercle porte un palier 4 coaxial au palier 3, l'arbre 5 du rotor étant supporté par ces deux paliers. Un flasque en matière plastique de forme circulaire 6 est solidaire de l'arbre 5 et assure la fixation selon un plan perpendiculaire à l'axe du rotor d'une série de bobines plates sans noyau 7 réparties autour de l'axe de l'arbre 5, et constituant les enroulements moteurs. Le rotor comporte en outre un collecteur 8 dont la construction est classique et qui n'a donc pas besoin d'être décrit en détail ici. Ce collecteur est constitué de lamelles parallèles isolées les unes des autres et connectées chacune à un point de l'enroulement situé entre deux bobines.

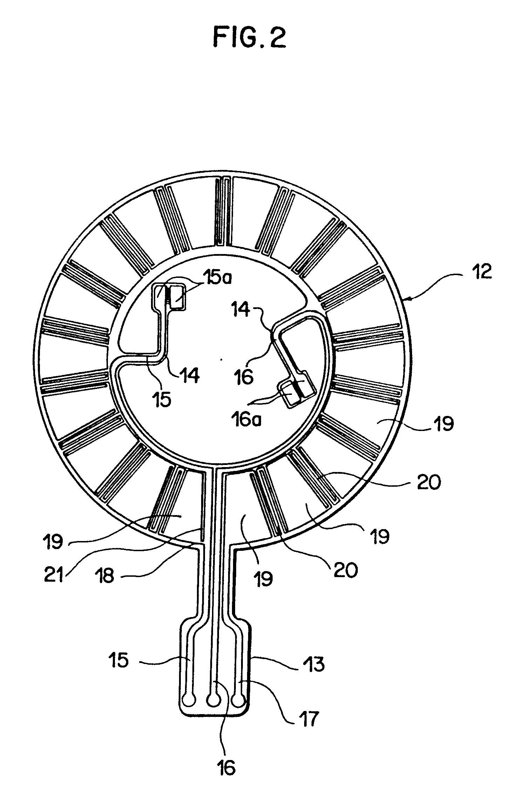

Les éléments du stator du moteur décrit sont supportés par la platine 1. Ils comportent essentiellement un aimant multipolaire 9 de forme annulaire comportant un nombre de paires de pôles qui correspond au nombre des bobines de l'enroulement 7. Ainsi, chaque bobine de l'enroulement 7 et chaque paire de pôles de l'aimant 9 s'étendent sur une zone en forme de secteur de cercle, l'ensemble de ces zones formant une couronne qui entoure l'axe de l'arbre 5. Les axes magnétiques de l'aimant multipolaire 9 sont parallèles entre eux, parallèles à l'axe de l'arbre 5 et distribués autour de cet arbre. Les éléments 1 et 2 du moteur décrit assurent la fermeture du circuit magnétique de l'aimant. Le stator comporte encore un organe de support 10 de forme annulaire logé à l'intérieur de l'aimant 9 et sur lequel sont montés des éléments (non représentés) qui pressent des balais 11 contre le collecteur 8. Enfin, le stator comporte un circuit souple 12 qui est constitué d'un substrat en matière isolante mince sur lequel est formé par la technique des circuits imprimés un circuit électrique remplissant dans le moteur différentes fonctions. Les détails de l'élément souple 12 ainsi que la forme du circuit sont visibles à la fig. 2. On voit que le substrat 12 a une forme annulaire avec une languette radiale extérieure 13 et deux languettes intérieures coudées 14 disposées symétriquement par rapport au centre du substrat qui, lorsque ce dernier est en place, coincide avec l'axe du moteur. Le circuit imprimé sur le substrat 12 comporte tout d'abord trois pistes 15, 16, 17 qui sont imprimées sur la languette 13. Deux de ces pistes (15 et 16) constituent les connexions d'alimentation de l'enroulement 7. Ces deux pistes s'étendent parallèlement dans le sens radial jusque sur le bord interne du substrat 12, s'étendent ensuite en arc de cercle le long de ce bord interne jusqu'à l'une des languettes 14 qu'elles couvrent jusqu'à leur extrémité. Les pistes 15 et 16 se terminent par des plages étalées 15a 16a, qui, comme on le voit à la fig. 1 sont soudées sur les balais 11. La troisième piste 17 est raccordée à un circuit qui s'étend sur la partie annulaire du substrat 12 tout autour du moteur et qui est connecté au point de raccordement 18 avec la languette 15. Ce circuit formé par gravure d'un revêtement mince de cuivre déposé sur le substrat 12 comporte une série de plages pleines 19 en forme de secteur de cercle dont l'ouverture est la même que celle de chacune des bobines de l'enroulement 7 et de chacune des paires de pôles de l'aimant 9. Ces plages 19 sont connectées les unes aux autres en série par des zones striées 20 intercalées chacune entre deux plages 19 et dans lesquelles les éléments sur lesquels le cuivre a été éliminé forment des barres radiales très rapprochées les unes des autres et s'étendant alternativement depuis le bord interne et depuis le bord externe du revêtement de cuivre que porte le substrat 12. Ainsi, deux plages 19 sont reliées l'une à l'autre par une piste étroite en zig-zag formée d'éléments radiaux connectés entre eux alternativement à leur extrémité interne et à leur extrémité externe. Comme on le voit à la fig. 2, la dernière plage 19 voisine du point de connexion 18 est séparée de la piste 15 par une seule strie radiale 21 qui s'étend presque jusqu'à la limite extérieure du revêtement de cuivre sur le substrat 12 de façon à réaliser le point de connexion 18.Le substrat 12 est monté sur l'aimant 9, dans l'entrefer. Il peut par exemple être composé d'un film de Kapton de 25 μm d'épaisseur, la couche de cuivre qu'il porte et dans laquelle le circuit décrit est gravé, présentant une épaisseur de 35 μm ou plus.

Les plages 19 sont destinées à jouer un rôle analogue à celui d'une spire en court-circuit que l'on aurait introduite dans le moteur. Ces plages permettent par un effet de transformateur un amortissement des pointes de tension dans le bobinage et provoquent une réduction apparente de l'inductance du bobinage. La présence de ces plages conduit donc entre autre à une augmentation notable de la durée de vie du collecteur et du balais.

En outre, les zones de liaison 20 sont destinées à remplacer le montage d'une résistance de mesure en série avec le bobinage du moteur dans le but d'assurer le réglage de la vitesse de rotation du moteur. En effet, les surfaces qu'il est nécessaire de couvrir par les plages 19 pour réaliser l'effet de spire en court-circuit sont suffisamment limitées pour que, dans les zones intermédiaires, on ait assez de place pour graver des pistes radiales étroites susceptibles de constituer les résistances de réglage en série avec le bobinage et avec les spires en court-circuit.

L'ensemble de la pièce 12 forme ainsi un élément unitaire dont la fabrication est simplifiée puisqu'elle ne nécessite qu'un seul masque lors de la gravure chimique du revêtement de cuivre supporté par le substrat 12, et qui peut être logé dans un espace réduit à l'intérieur du moteur. De plus, grâce à cette disposition dans l'entrefer, et grâce à un dimensionnement judicieux, on peut obtenir une amélioration de la précision du réglage de vitesse réalisé par la résistance en série. En effet, on sait que le montage d'une résistance de réglage en série avec le bobinage du moteur permet dans les conditions habituelles une certaine régulation de la vitesse mais que cette régulation est d'une précision limitée, surtout du fait des différences de températures qui peuvent s'établir entre la résistance de réglage et le bobinage. Or, avec la disposition décrite, dans laquelle la résistance se trouve directement dans l'entrefer du moteur, la température de la résistance série est constamment la même que celle du bobinage moteur. On peut en effet avoir des constantes de temps thermiques qui sont très proches les unes des autres pour les deux parties de l'enroulement. De plus, lorsqu'une différence de température se produit, elle est rapidement compensée par l'échange thermique entre les deux parties de l'enroulement. Cette disposition constitue également un blindage efficace contre les chocs thermiques qui peuvent être provoqués par des causes externes.

En résumé, la disposition décrite représente une amélioration au point de vue de la construction des moteurs à courant continu, à collecteur, en la simplifiant et en abaissant son coût, et en même temps une amélioration au point de vue des fonctions puisque la stabilisation de la vitesse est améliorée.

**Revendications**

1. Moteur électrique à courant continu, comportant un rotor pourvu d'un collecteur (8) et un stator pourvu de balais (11) et de bornes d'alimentation, et dans lequel un substrat mince (12) portant un réseau de conducteurs imprimés (15 à 20) est disposé au moins en partie dans un entrefer ménagé entre le stator et le rotor, ce réseau étant agencé de manière à assurer l'une des fonctions suivantes: la connexion entre les bornes d'alimentation et les balais ou l'amortissement des pointes de commutation, caractérisé en ce que le réseau est agencé dans son ensemble de façon à assurer l'une et l'autre des deux fonctions et comporte en outre une ou plusieurs zones ajourées, conformées de façon à réaliser des éléments de résistance de réglage (20), en série avec les conducteurs d'alimentation (15, 16).

2.  Moteur électrique selon la revendication 1, caractérisé en ce que le réseau de conducteurs imprimé sur le substrat comporte une ou plusieurs plages (19) formant chacune une spire en court-circuit dans l'entrefer.

3.  Moteur électrique selon la revendication 2, caractérisé en ce que le réseau de conducteurs imprimé sur le substrat comporte des segments de piste (15, 16) reliant les balais aux bornes d'alimentation.

4.  Moteur électrique selon la revendication 3, dans lequel l'entrefer est un espace de forme plane et le rotor (5 à 8) comporte une série de bobines plates (7) réparties autour de l'axe du moteur, caractérisé en ce que le substrat (12) comporte une partie annulaire s'étendant en regard des bobines (7) et présentant une série de plages conductrices (19) et une série de zones conductrices ajourées (20), ces plages et ces zones étant alternées sur le pourtour de la dite partie annulaire.

5.  Moteur électrique selon la revendication 4, caractérisé en ce que chaque plage conductrice (19) présente des dimensions qui correspondent à la surface d'une bobine (7).

6.  Moteur électrique selon la revendication 5, caractérisé en ce que les dites zones ajourées (20) comportent chacune une série de pistes radiales étroites rapprochées les unes des autres et connectées en série à leurs extrémités extérieures et intérieures.

## Claims

1.  Direct current electric motor comprising a rotor equipped with a commutator (8) and a stator equipped with brushes (11) and supply terminals, and in which a thin substrate (12) bearing a pattern of printed conductors (15 to 20) is disposed at least in part in an airgap contrived between the stator and the rotor, this pattern being arranged in such a way as to ensure one of the following functions: the connection between the supply terminals and the brushes or the attentuation of voltage surges upon commutation, characterized in that the pattern is arranged as a whole so as to ensure one and the other of the two functions and also comprises one or more perforated zones, formed to constitute regulating resistor means (20), in series with the supply terminals (15, 16).

2.  Electric motor according to claim 1, characterized in that the pattern of conductors printed on the substrate comprises one or several zones (19) each forming a shortened turn in the air gap.

3.  Electric motor according to claim 2, characterized in that the pattern of conductors printed on the substrate comprises paths (15, 16) which connect the brushes to the supply terminals.

4.  Electric motor according to claim 3, in which the air gap is a planar space and the rotor (5 to 8) comprises a plurality of flat coils (7) distributed about the axis of the motor, characterized in that the substrate (12) comprises an annular portion facing the coils (7) and including a series of conductive zones (19) and a series of perforated conductive zones (20), alternated around the periphery of said annular portion.

5.  Electric motor according to claim 4, characterized in that the dimensions of each conductive zone (19) correspond to the surface of a coil (7).

6.  Electric motor according to claim 5, characterized in that said perforated zones (20) each comprise a series of narrow radial paths disposed in proximity to one another and connected in series at their outer and inner ends.

## Patentansprüche

1.  Elektrischer Gleichstrommotor, welcher einen Rotor, versehen mit einem Kollektor (8), einen Stator, versehen mit Bürsten (11) und Anschlussklemmen aufweist, und in welchem ein dünnes Substrat (12), auf welchem ein Leiternetz (15 bis 20) aufgedruckt ist, mindestens teilweise in einem Luftspalt, der zwischen dem Stator und dem Rotor besteht, angeordnet ist, wobei das Leiternetz so angeordnet ist, dass eine der folgenden Funktionen sichergestellt ist: die Verbindung zwischen den Anschlussklemmen und den Bürsten oder die Dämpfung der Schaltspitzen, dadurch gekennzeichnet, dass das Netz in seiner Einheit dergestalt angeordnet ist, dass die eine und die andere der beiden Funktionen sichergestellt sind, und dass es unter anderem eine oder mehrere durchbrochene Zonen enthält, die so gestaltet sind, dass Elemente eines Stellwiderstandes (20) in Serie mit den Anschlussleitern (15, 16) angeordnet sind.

2. Gleichstrommotor nach Anspruch 1, dadurch gekennzeichnet, dass das auf das Substrat aufgedruckte Leiternetz einen oder mehrere Bereiche (19) enthält, wovon jeder eine Kurzschlusswindung im Luftspalt bildet.

3. Gleichstrommotor nach Anspruch 2, dadurch gekennzeichnet, dass das auf das Substrat aufgedruckte Leiternetz Segmente von Bahnen (15, 16) enthält, welche die Bürsten mit den Anschlussklemmen verbinden.

4. Gleichstrommotor nach Anspruch 3, in welchem der Luftspalt ein Raum von ebener Form ist und der Rotor (5 bis 8) eine Reihe von flachen Spulen (7) enthält, welche rund um die Achse des Motors verteilt sind, dadurch gekennzeichnet, dass das Substrat (12) aus einem ringförmigen Teil besteht, der sich über die Spulen (7) erstreckt und eine Reihe von Leiterbereichen (19) und eine Reihe von durchbrochenen Leiterzonen (20) bildet, wobei die Bereiche und Zonen alternierend auf dem Umfang des besagten ringförmigen Teils angeordnet sind.

5. Gleichstrommotor nach Anspruch 4, dadurch gekennzeichnet, dass jeder Leiterbereich (19) Dimensionen aufweist, die der Oberfläche einer Spule (7) entsprechen.

6. Gleichstrommotor nach Anspruch 5, dadurch gekennzeichnet, dass jede der besagten durchbrochenen Zonen (20) eine Anzahl von radialen Bahnen aufweist, welche eng benachbart eine neben der anderen angeordnet sind und mit ihren äusseren und inneren Endpunkten in Serie verbunden sind.

## FIG. 1

EP 0 197 888 B1

# FIG.2